# EUROPEAN PATENT APPLICATION

(11) **EP 4 060 582 A1**
(43) Date of publication of application: **21.09.2022**
(21) Application number: 22162643.5
(22) Date of filing: 17.03.2022
(51) Int. Cl.: G06Q 20/02, G06Q 20/24, G06Q 20/34

(54) **SYSTEM FOR AND METHOD OF SUPPORTING A SERVICE**

(30) Priority: 17.03.2021 NL 2027766
(71) Applicant: bunq B.V., 1043 BS Amsterdam (NL)
(72) Inventor: Niknam, Ali, 1015 RK Amsterdam (NL); De Roos, André, 1053 TS Amsterdam (NL)
(74) Representative: Nederlandsch Octrooibureau

(57) **Abstract**

A method of and system for providing a service to a user comprising:
receiving (500), by a first service provider terminal (132(i)), an account number (PAN; DAN) stored in a chip of a mobile device (102; 112; 103), which mobile device is configured to be used in open-loop financial transactions;
checking (501), by the first service provider terminal (132(i)) if the received account number (PAN; DAN) is present on a closed-loop list, the closed-loop list identifying account numbers for which a closed-loop service is supported;
if so, forwarding (503), by the first service provider terminal (132(i)), the received account number to a service provider server (134(j)) configured to either approve or deny, respectively, the closed-loop service and receiving, from the service provider server (134(j)), either an approval signal (508) or a denial signal (506).

## Description

### Field of the invention

The present invention relates to a system for and method of supporting a service, for example, a service provided by an operator of public transport in trains, busses, trams, undergrounds, etc.

### Background art

Historically, most card-based transit solutions for ticketing have been based on so-called closed-loop systems, i.e. systems in which cards have the solitary purpose to check-in and check-out of public transport. Examples are the Oyster card (Transport for London) or the OV Chipcard (Translink Systems in the Netherlands). Cards were issued by the Public Transport Operator, PTO or a service provider, who often operated on an exemption from several regulatory requirements for monetary institutions. In the context of the present document, such services are called closed-loop services.

In recent years, several PTOs have opened their gates / terminals to support such services for EMV-based bank cards (EMV is short for Europay, MasterCard, and Visa), thereby making an upfront purchase of a dedicated card unnecessary and allowing everyone with a standard Near Field Communication, NFC, payment card onto the system to travel. Fares are calculated by the PTO / service provider, and charged to the payment card / account in regular intervals. The same card can, thus, be used in all ways of life, and is not confined to the closed-loop of the service provider system only. In the context of the present document such services are called open-loop services.

Also payment methods based on presenting ones mobile terminal to the gates / service provider terminal, like ApplePay^{™} and GooglePay^{™}, use such an open-loop service.

However, the closed-loop scenario has increasing regulatory requirements (e.g. around AML5), and also faces challenges from the perspective of user-friendliness as well as operational challenges around handling of physical cards. On the other hand, the open-loop approach, which routes every transaction through the global network of the respective cards scheme (i.e. Mastercard, VISA, AMEX, etc.), is lower on operational requirements but higher on transaction cost (due to the various parties involved, e.g. acquirers, schemes, etc.).

### Summary of the invention

There is a desire in the market for setting up a transaction system that frees the PTO / service provider from all regulatory requirements relating to financial transactions and allows a user of a credit card / debit card / mobile terminal to also use this for settling transaction costs relating to services like those provided by PTOs and other service providers in an easier way than in the known open-loop scenario.

According to the present invention, a method as defined in claim 1 is provided.

A system according to the invention is defined in an independent system claim.

The proposed method/system may have at least one of the following advantages.
- A regulated entity, like a dedicated bank or other dedicated payment institution, issues cards and manages monetary accounts for end users on behalf of PTOs (or other service providers), thus freeing the PTO / service provider from all regulatory requirements;
- Cards are issued under a reputed payment scheme, which makes their use non-exclusive to the service, like transport by public transport, as provided by the service provider;
- Transactions relating to the service are routed directly to the regulated, issuing entity, and not via the service provider server, to reduce transaction costs; to do this, cards need to be clearly identifiable, which is done based on a list identifying account numbers of end users subscribed to the new scheme; such account numbers may be part of a specific range, e.g. a Bank Identification number, BIN, range;
- Outside the service environment, cards are recognised as regular payment cards and can potentially be used wherever the selected payment scheme is accepted.
   In this setup, a card issuer has the
- ability to define rules for proprietary transit transactions,
- ability to process proprietary transit transaction format from PTO / service provider,
- ability to settle user accounts based on fare calculations from PTO / service provider,
- ability to settle PTO accounts at the end of fee invoicing period (e.g. daily, weekly, etc.).

### Brief description of the drawings

Embodiments of the present disclosure will be described herein below with reference to the accompanying drawings. However, the embodiments of the present disclosure are not limited to the specific embodiments and should be construed as including all modifications, changes, equivalent devices and methods, and/or alternative embodiments of the present disclosure.

The terms "have," "may have," "include," and "may include" as used herein indicate the presence of corresponding features (for example, elements such as numerical values, functions, operations, or parts), and do not preclude the presence of additional features.

The terms "A or B," "at least one of A or/and B," or "one or more of A or/and B" as used herein include all possible combinations of items enumerated with them. For example, "A or B," "at least one of A and B," or "at least one of A or B" means (1) including at least one A, (2) including at least one B, or (3) including both at least one A and at least one B.

The terms such as "first" and "second" as used herein may modify various elements regardless of an order and/or importance of the corresponding elements, and do not limit the corresponding elements. These terms may be used for the purpose of distinguishing one element from another element. For example, a first element may be referred to as a second element without departing from the scope the present invention, and similarly, a second element may be referred to as a first element.

It will be understood that, when an element (for example, a first element) is "(operatively or communicatively) coupled with/to" or "connected to" another element (for example, a second element), the element may be directly coupled with/to another element, and there may be an intervening element (for example, a third element) between the element and another element. To the contrary, it will be understood that, when an element (for example, a first element) is "directly coupled with/to" or "directly connected to" another element (for example, a second element), there is no intervening element (for example, a third element) between the element and another element.

The expression "configured to (or set to)" as used herein may be used interchangeably with "suitable for" "having the capacity to" "designed to" "adapted to" "made to," or "capable of" according to a context. The term "configured to (set to)" does not necessarily mean "specifically designed to" in a hardware level. Instead, the expression "apparatus configured to..." may mean that the apparatus is "capable of..." along with other devices or parts in a certain context.

The terms used in describing the various embodiments of the present disclosure are for the purpose of describing particular embodiments and are not intended to limit the present disclosure. As used herein, the singular forms are intended to include the plural forms as well, unless the context clearly indicates otherwise. All of the terms used herein including technical or scientific terms have the same meanings as those generally understood by an ordinary skilled person in the related art unless they are defined otherwise. The terms defined in a generally used dictionary should be interpreted as having the same or similar meanings as the contextual meanings of the relevant technology and should not be interpreted as having ideal or exaggerated meanings unless they are clearly defined herein. According to circumstances, even the terms defined in this disclosure should not be interpreted as excluding the embodiments of the present disclosure.

For the purpose of determining the extent of protection conferred by the claims of this document, due account shall be taken of any element which is equivalent to an element specified in the claims.

The present invention will be discussed in more detail below, with reference to the attached drawings, in which:
Figures 1A and 1B show a system and flowchart for supporting a credit card transaction;
Figures 2A and 2B show a system and flowchart for supporting a debit card transaction;
Figure 3A shows a system for supporting a closed-loop service with a dedicated service card, as well as an open-loop service with credit cards, debit cards and mobile terminals;
Figure 3B shows a schematic flowchart for recharging a dedicated service card;
Figure 3C shows a schematic flowchart for supporting a closed-loop service to a user of a dedicated service card;
Figure 3D shows a schematic flowchart for supporting an open-loop service to a user of a credit card or mobile terminal;
Figures 4A and 4B show systems that can be used to support closed-loop services with devices, like debit cards, credit cards and mobile terminals, that can also be used in open-loop transactions;
Figure 5 shows an embodiment of a flowchart for a closed-loop service provided to a user of devices, like debit cards, credit cards and mobile terminals, that can also be used in open-loop transactions;
Figure 6 shows an embodiment of a flow chart for enrolling a mobile terminal to the new closed-loop service;
Figure 7 shows some components of an embodiment of chips used in debit cards and credit cards;
Figure 8 shows some components of an embodiment of computer assisted equipment used in the system of the invention, like service provider terminals, a service provider server, and financial institution servers.

### Description of embodiments

The figures show different embodiments of the invention, which will be described in detail hereinafter. It is to be understood that elements / components shown in one or more of these embodiments and not in others may be used in those others too unless mechanical or other limitations prevent such an implementation. Moreover, describing features of different embodiments in a single paragraph does not automatically mean that those features are inextricably linked. They may be applied separately from one another.

In the specification below, the same reference numbers in different drawings refer to the same elements/components.

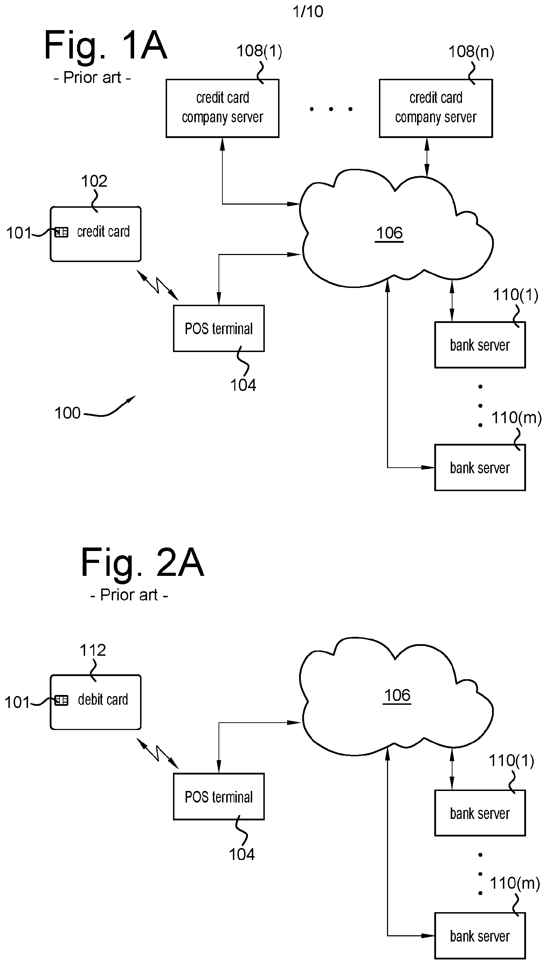

As a general introduction to the present invention Figures 1A to 3D show prior art systems for performing financial transactions with chip cards. In the drawings, the chip cards are depicted as smart cards with a chip which are usually worn by a user in a wallet or the like. However, the invention is equally applicable to communication devices provided with communication capabilities like mobile phones, tablets, laptops, smart watches, etc. which accommodate one or more chips e.g. in the form of a SIM (= subscriber identity module) card, e.g., which nowadays support financial services like ApplePay^{™} and GooglePay^{™}.

Figure 1A shows a schematic overview of a system suitable for supporting a well-known credit card transaction. It is meant as an example only. Variants are possible. The system comprises one or more Point of Sale, POS, terminals 104 arranged at locations where a user of a credit card 102 wishes to buy goods or receive services for which he/she has to pay, e.g. at a shop, a museum, a swimming pool, or an amusement park.

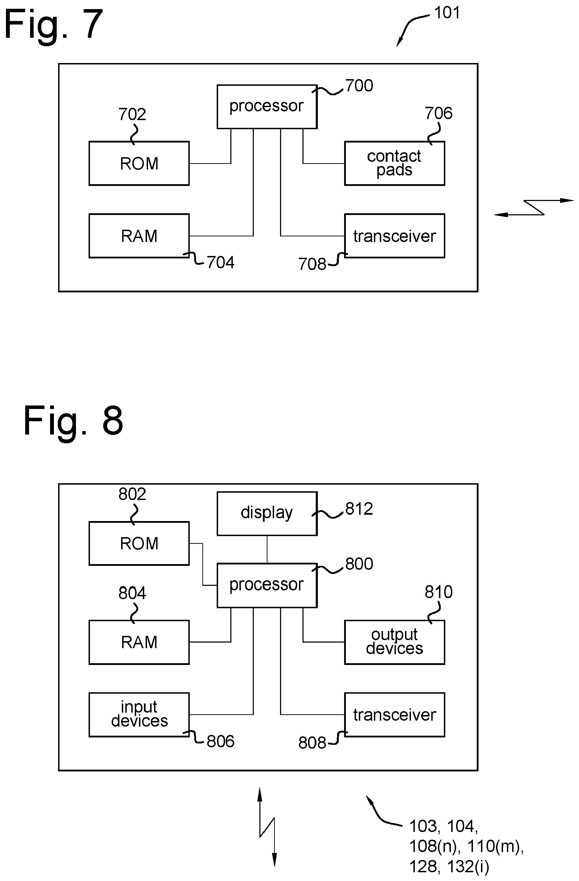

Credit card 102 is provided with a chip 101 which may have or not have contact pads on the outer surface of the credit card 102 for electrically contacting a suitable connector (not shown) inside POS terminal 104. The chip 101 may or may not have a transceiver configured for wireless communication with POS terminal 104. An overview of basic elements of chip 101 is shown in Figure 7.

Figure 7 shows chip 101 comprising a processor 700 which is connected to Read Only Memory, ROM, 702 Random Access Memory, RAM, 704, contact pads 706 and a transceiver 708. ROM 702 and RAM 704 may be implemented by any suitable type of memory, already on the market or still to be developed. Transceiver 708 is configured to support receiving and transmitting of wireless signals. These signals may relate to data, instructions and power (in case of chip 101 being a RFID chip). The wireless communication may be based on any known or still to be developed short distance communication protocol including but not limited to Near Field Communication, NFC, and radio-frequency identification technology, RFID. Contact pads 706 are configured to contact a connector in a POS terminal 104 or other terminal such that data, instructions and power can be exchanged between processor 700 and a processor inside such a terminal.

Returning to Figure 1A, POS terminal 104 is connected to a telecommunication network 106 via at least one of a wired and wireless communication connection. This communication connection may be based on any known or still to be developed communication protocol including all protocols documented in one or more current and/or future international telecommunication standards.

The system of Figure 1A also comprises one or more credit card company servers 108(n), n = 1, 2, ..., N, as well as one or more bank servers 110(m), m = 1, 2, ..., M. All credit card company servers 108(n) and bank servers 110(m) are also connected to the telecommunication network 106 via at least one of a wired and wireless connection. These communication connections may also be based on any known or still to be developed communication protocol including all protocols documented in one or more current and/or future international telecom standards.

A seller of goods or provider of services is often called an "acceptant", i.e., he/she will accept a transfer of money to be paid for the goods or services. The bank associated with this bank server 110(m) is often called an "acquirer" because this bank server acquires the transferred money. A bank server 110(m+1) associated with a bank at which the credit card holder has a bank account is often called an "issuer", because it has issued the credit card 102 to the holder.

POS terminal 104, as well as any other terminal configured to communicate with credit card 102, credit card company servers 108(n) and bank servers 110(m) are equipped with units configured to provide them with the required functionality. An example is shown in Figure 8. As shown, they all comprise a processor 800 connected to ROM 802, RAM 804, input devices 806, a transceiver 808, output devices 810, and a display 812. Of course other units may be applied too. ROM 802 and RAM 804 may be implemented by any suitable type of memory, already on the market or still to be developed. Input devices 806 may include a key board and a mouse, and any other input device known in the art suitable to receive data and instructions from a user. Transceiver 808 is configured to support receiving and transmitting of wireless signals. These signals may relate to data and instructions. Output devices 810 may, e.g., include a printer. Equipment to receive electrical power is also present but not shown.

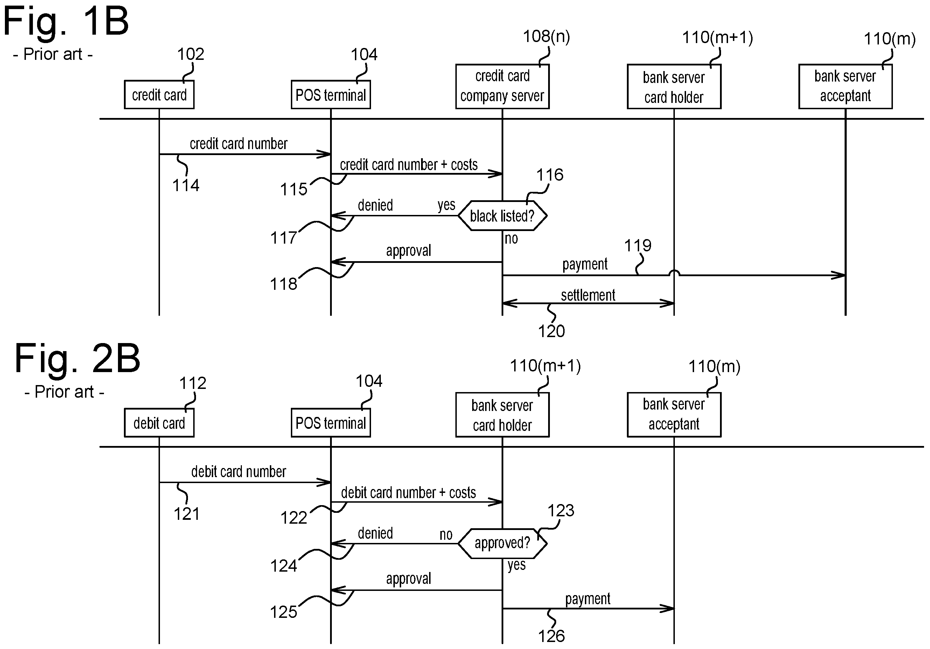

Figure 1B depicts a flow chart showing an example of basic actions performed by the units of Figure 1A to support a credit card transaction. Variants to this scheme are possible.

The user of the credit card 102 allows the POS terminal 104 to read, action 114, essential data as stored in chip 101 of credit card 102. He/she does so by either establishing a physical or wireless contact between the chip 101 and the POS terminal 104. This is prior art and needs no further explanation. The essential data includes a unique credit card number associated with credit card 102.

Together with an indication of the costs for the provided service or bought goods, the credit card number is forwarded, action 115, as part of an authorization request to a credit card company server 108(n) associated with credit card 102. The credit card company server 108(n) may, e.g., be operated by VISA^{™} or Master Card^{™}. Credit card company server 108(n) checks, action 116, if the credit card 102 is black listed. If so, credit card company server 108(n) sends a denial signal, action 117, to POS terminal 104 and the financial transaction will be refused. POS terminal 104 will show a message to that effect on its display 812. Staff operating POS terminal 104 may then ask for another way of paying for the goods / service.

However, if credit card 102 is white listed, credit card company server 108(n) transmits an approval signal, action 118, to POS terminal 104, which will show the approval on display 812.

In action 119, credit card company server 108(n) sends a payment signal to bank server 110(m) of the acceptant to pay for the delivered goods or provided services. The transmission of this payment signal in action 119 may be later in time than the transmission of the approval signal in action 118. The paid amount will be credited to the bank account of the acceptant.

In action 120, credit card company server 108(n) settles the credit card transaction with bank server 110(m+1) associated with credit card 102, i.e., the credit card transaction costs will be debited from the bank account at bank server 110(m+1) associated with the credit card holder to his/her account at credit card company server 108(n).

Figure 2A shows a system comprising units configured to support a known financial transaction with a debit card 112. Debit card 112 is provided with chip 101 which may have or not have contact pads on the outside surface of debit card 112 just like credit card 102. In this system no credit card company servers are used. Figure 2B shows a flow chart of actions performed by the different units shown in Figure 2A to support a financial transaction.

In action 121, after the user of debit card 112 has made a wireless connection or a physical connection via the contact pads 706 with POS terminal 104, debit card 112 transmits required information as stored in its memory 702, 704, including a bank account number, to POS terminal 104. POS terminal 104 transmits, action 122, this bank account number together with transaction costs as part of an authorization request to bank server 110(m+1) associated with the debit card 112.

In action 123, bank server 110(m+1) checks if the bank account associated with debit card 112 allows the requested financial transaction. If not, bank server 110(m+1) sends a denial signal to POS terminal 104 which will show a refusal message on its display 812. Staff operating POS terminal 104 may ask for another way of paying the goods or service.

If bank server 110(m+1) approves the requested financial transaction, it sends an approval signal, action 125, to POS terminal 104 which will show a message to that effect on display 812.

Some time after that, bank server 110(m+1) sends a payment signal, action 126, to bank server 110(m) associated with the acceptant, i.e., the seller of the goods or provider of the services.

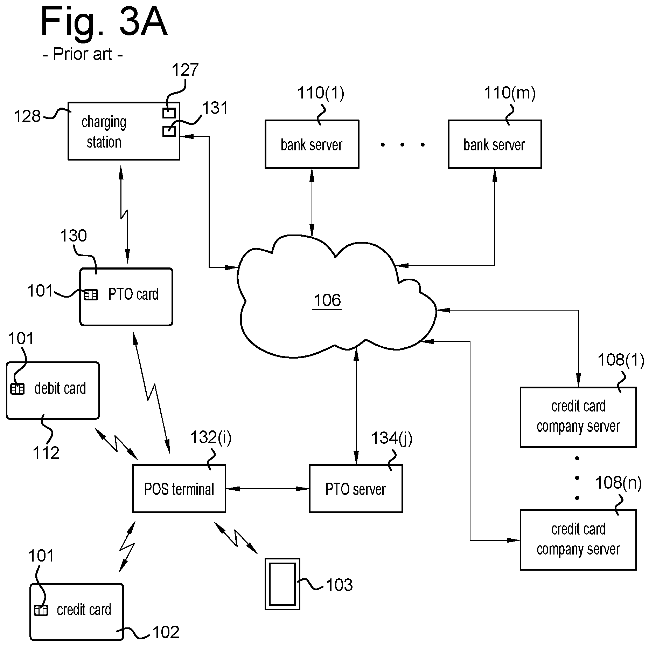

Figure 3A shows a schematic setup of a prior art system configured to support a public transport service to clients who have subscribed to such services as provided by a Public Transport Operator, PTO. It is noted that, though the term "PTO service" will be used hereinafter to indicate that service, the system as shown and explained is not limited to public transport. Services may be totally different, e.g., relating to access to events, a zoo, an amusement park, a casino, etc.

Apart from the units already explained with reference to Figures 1A and 2A, Figure 3A show a PTO card 130 and a charging station 128. Charging station 128 may be arranged in a railway station, a bus station, a store, etc. PTO card is provided with a chip 101 and may be or may not be provided with contact pads on its outer surface connected to the chip 101 which are configured for transmission and receipt of data and instructions, as well as receipt of power, as explained above. Charging station 128 is provided with a PTO card interface unit 127 which is configured to exchange data and instruction signals with PTO card 130, and send power to PTO card 130. Moreover, charging station 128 is provided with a debit/credit card reader 131.

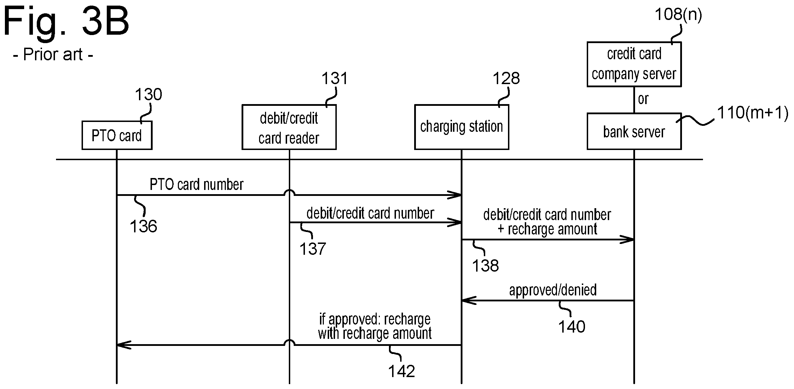

Figure 3B shows a schematic flow chart of actions that can be taken to recharge a rechargeable PTO card 130. In action 136, a user of PTO card 130 brings PTO card 130 into contact with PTO card interface unit 127, which may, e.g., be arranged such that PTO card 130 can be inserted into it to make a communication connection to an internal transceiver 808 (cf. Figure 8) or connector (not shown in Figure 8) of charging station 128. Charging station 128 requests the user to indicate the amount of money with which he/she wishes to recharge PTO card 130. He/she can pay the desired amount of money with a cash payment, a debit card 112 or a credit card 102. If cash payment is supported, charging station 128 is provided with a suitable unit (not shown) configured to receive cash. Action 137 shows the option where the payment is performed by a debit or credit card and the card number is read from the card and sent to the charging station 128.

Charging station 128 sends the card number and the requested recharge amount to either a credit card company server 108(n) or a bank server 110(m+1) associated with the credit card 102 or debit card 112 used by the user. Credit card company server 108(n) or bank server 110(m+1) approves or denies the request in the same way as a similar request by POS terminal 104 is dealt with. This has been explained with reference to Figures 1A, 1B, 2A, and 2B and will not be repeated here. An approval/denial signal from credit card company server 108(n) or bank server 110(m+1) is received by charging station 128 in action 140. If approved, charging station 128 recharges PTO 130 with the requested amount, action 142.

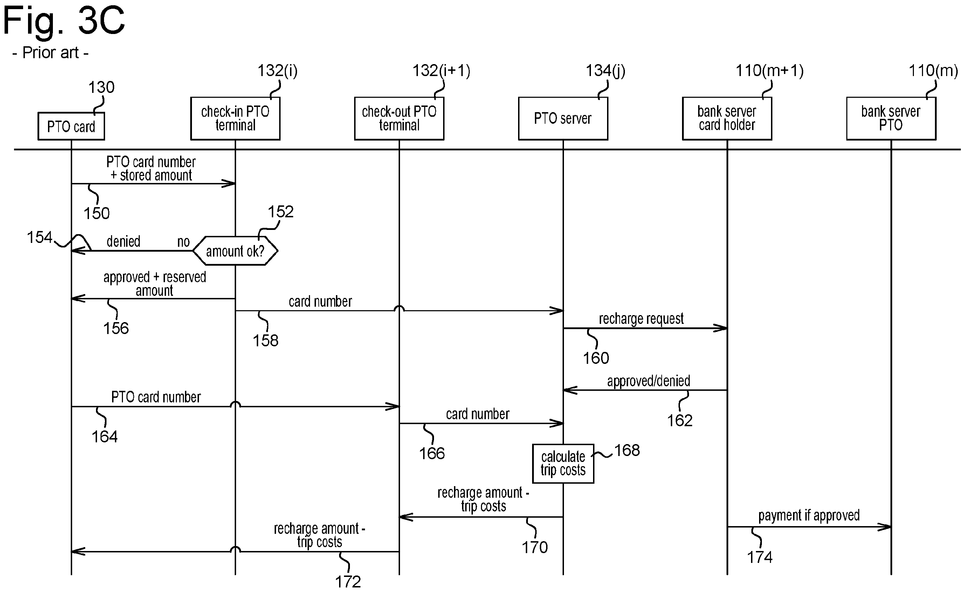

Figure 3C shows a schematic flow chart of actions performed by a system supporting a public transport transaction by a PTO card 130. These actions are known from the prior art. PTO card 130 is a rechargeable card, either via a charging station 128 as explained with reference to Figure 3B or via a PTO terminal 132(i) as will be explained hereinafter.

A user presents his/her PTO card 130 to a check-in terminal 132(i) when he/she desires to make a trip. This may be done in the form of swiping the PTO card 130 along PTO terminal 132(i) or touching PTO terminal 132(i) with PTO card 130 for a certain moment such that PTO terminal 132(i) can read PTO card 130. During the swiping or touching, PTO terminal reads some data of the PTO card 130, like a PTO card number and a stored amount of money, action 150.

In action 152, PTO terminal 132(i) checks if the stored amount is more than a certain minimum amount. This minimum amount may, e.g., be as high as is required to cover costs of a maximum to be expected for the travel costs. If not, then, action 154, PTO terminal 132(i) denies the requested public transport transaction and informs the user accordingly, e.g., via display 812 and/or an audible denial sound via a suitable output device 810.

If the amount is higher than the minimum amount, PTO terminal sends an approval signal to PTO card 130, together with a signal indicating a reservation of a predetermined amount, action 156. This reservation guarantees that the presently stored amount cannot be used by another (service) provider before the end of the trip and the settlement by the current (service) provider after the end of the trip. PTO terminal 132(i) informs the user accordingly, e.g., via display 812 and/or an audible approval sound via a suitable output device 810. The denial and approval sounds may be different such that the user can easily distinguish the two.

In action 158, which may be at the same time as action 156 or earlier or later, PTO terminal 132(i) forwards the PTO card number to PTO server 134(j) associated with PTO terminal 132(i). PTO server 134(j) receives the PTO card number and checks if PTO card 130 associated with this PTO card number is set to be rechargeable via one of the PTO terminals 132(i) - this option of being chargeable via one of the PTO terminals 132(i) may have been set by the user in PTO server 134(j) via an Internet action. If yes, PTO server 134(j) sends a recharge request to bank server 110(m+1) associated with the holder of PTO card 130. This recharge request includes a bank account number of the card holder at bank server 110(m+1). The recharge request may, in an embodiment, relate to a fixed amount of money as set in PTO server 134(j). The holder of PTO card 130 may have set this amount as well as his/her bank account number in PTO server 134(j) via an Internet action. The fixed amount may, for instance, be 10, 20, 30, 40 or 50 Euro.

Bank server 110(m+1) checks if the bank account relating to the bank account number allows paying of this fixed amount. In dependence on the outcome bank server 110(m+1) sends an approval/denial signal, action 162, to PTO server 134(j). PTO server 134(j) then waits until it is notified of a check-out action, action 164, of PTO card 130.

Such a check-out action 164 is (normally) performed by the user of PTO card 130 at another PTO terminal 132(i+1) than the check-in PTO terminal 132(i). PTO terminal 132(i+1) receives data from PTO card 130 including the PTO card number and an indication that this is a check-out action and not a check-in action. PTO terminal 132(i+1) forwards the PTO card number to PTO server 134(j), action 166. Based on, amongst others, data relating to the locations of PTO terminals 132(i) and 132(i+1) PTO server 134(j) calculates the total trip costs, action 168.

In action 170, PTO server 134(j) informs PTO terminal 132(i+1) of the received recharge amount minus the trip costs. In action 172, PTO terminal 132(i+1) forwards the received recharge amount minus the trip costs to PTO card 130 which balances this with the originally stored amount. It is observed that if the user has not set the option of the PTO card being rechargeable via one of the PTO terminals 132(i), actions 160/162 will not have been performed and this recharge amount equals 0 (zero).

In action 174, bank server 110(m+1) transfers the fixed recharge amount, if approved, to bank server 110(m) associated with the PTO who is providing the public transport service. Action 174 may be performed earlier or later than any one of the actions 164, 166, 168, 170, 172.

The flow of Figure 3C is an example of a closed-loop transaction process, i.e., it is dealt with by PTO server 134(j) operated by the PTO and PTO card 130 which is issued by the same PTO.

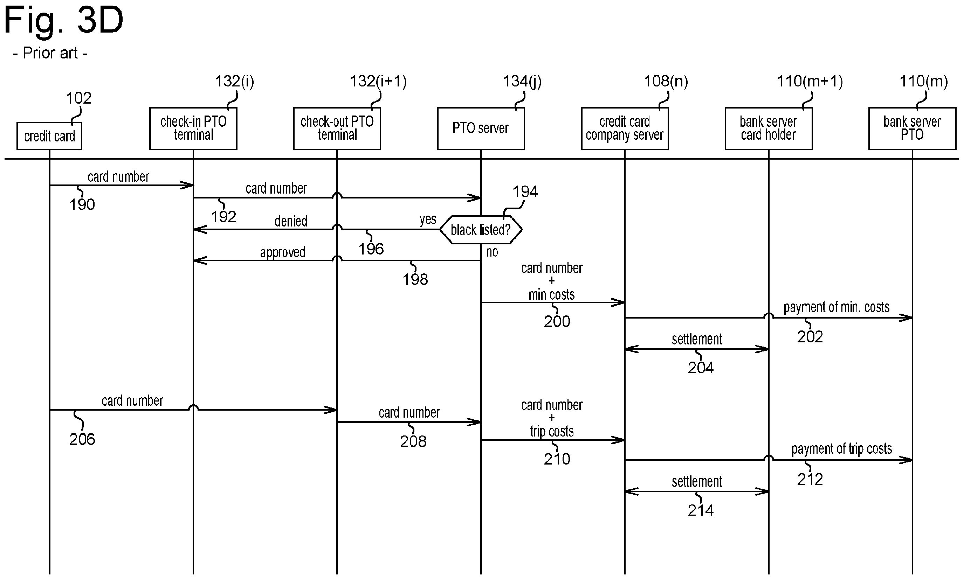

However, some PTOs also allow open-loop transactions in which a user can make a public transport trip while directly paying with his/her debit card 112, credit card 102 or a mobile terminal 103 at the check-in PTO terminal 132(i) and check-out PTO terminal 132(i+1). This will be explained in more detail with reference to Figure 3D which shows a schematic flow chart for a transaction process with a credit card 102.

As shown in Figure 3D, a user of credit card 102 who wishes to make a trip on public transport moves credit card 102 so close to check-in PTO terminal 132(i) that credit card 102 and PTO terminal 132(i) can communicate with each other. This can be done by a swiping action or touching PTO terminal 132(i) for a certain moment. During the swiping or touching PTO terminal 132(i) reads some data from credit card 102, action 190. The data includes the credit card number which is also called "primary account number", PAN. In action 192, PTO terminal 132(i) forwards the received credit card number to PTO server 134(j).

PTO server 134(j) checks, action 194, if credit card 102 is blacklisted. If so, PTO server 134(j) sends, action 196, a denial signal to PTO terminal 132(i). PTO terminal 132(i) may show this denial on display 812 and/or generate a denial sound by output device 810. If credit card 102 is not blacklisted PTO server 134(j) generates an approval signal and sends, action 198, an approval signal to PTO terminal 132 (i). PTO terminal 132(i) may show this approval on display 812 and/or generate an approval sound by output device 810. Approval sound and denial sound may be different such that a user can easily distinguish the two.

PTO server 134(j) recognizes the received credit card number (PAN) such that it knows to which associated credit card company server 108(n) a request for authorization of the transaction should be sent. To that effect, if the credit card is not blacklisted, the credit card number and a minimum amount of costs is transferred, action 200, by PTO server 134(j) to credit card company server 108(n) associated with credit card 102.

In action 202, at a certain moment in time, credit card company server 108(n) transfers an amount of money equivalent to the minimum costs to a bank account of the PTO at bank server 110(m) associated with the PTO providing the transport service. In action 204, credit card company server 108(n) settles this minimum amount with a bank account of the credit card holder at bank server 110(m+1).

The user of credit card 102 who wishes to finish the trip on the public transport moves credit card 102 so close to check-out PTO terminal 132(i+1) that the credit card and check-out PTO terminal 132(i+1) can communicate with each other. This can be done by a swiping action or touching check-out PTO terminal 132(i+1) for a certain moment. During the swiping or touching, check-out PTO terminal 132(i+1) reads some data from credit card 102, action 206. The data includes the credit card number (PAN). PTO terminal 132(i+1) forwards the credit card number (PAN) to PTO server 134(j), action 208, which knows the check-in PTO terminal 132(i) and calculates the required trip fee based on the check-in terminal 132(i) and check-out terminal 132(i+1).

In action 210, PTO server 134(j) transmits the credit card number (PAN) and the final trip costs to credit card company server 108(n) associated with credit card 102.

In action 212, at a certain moment in time, credit card company server 108(n) transfers an amount of money equivalent to the final trip costs minus the already charged minimum costs to a bank account of the PTO at bank server 110(m) associated with the PTO providing the transport service. In action 214, credit card company server 108(n) settles this amount with a bank account of the credit card holder at bank server 110(m+1). Instead of settling twice in actions 204 and 214, other schemes of payment may be used. E.g., action 200 may relate to reserving an amount equal to the minimum amount of costs only by PTO server 134(j) with credit card company server 108(n). Then, actions 202, 204 are not performed and only actions 212, 214 are performed.

It is observed that, in case a user uses his/her mobile terminal 103 for the transaction, a similar process will be performed as the one explained with reference to Figure 3D.

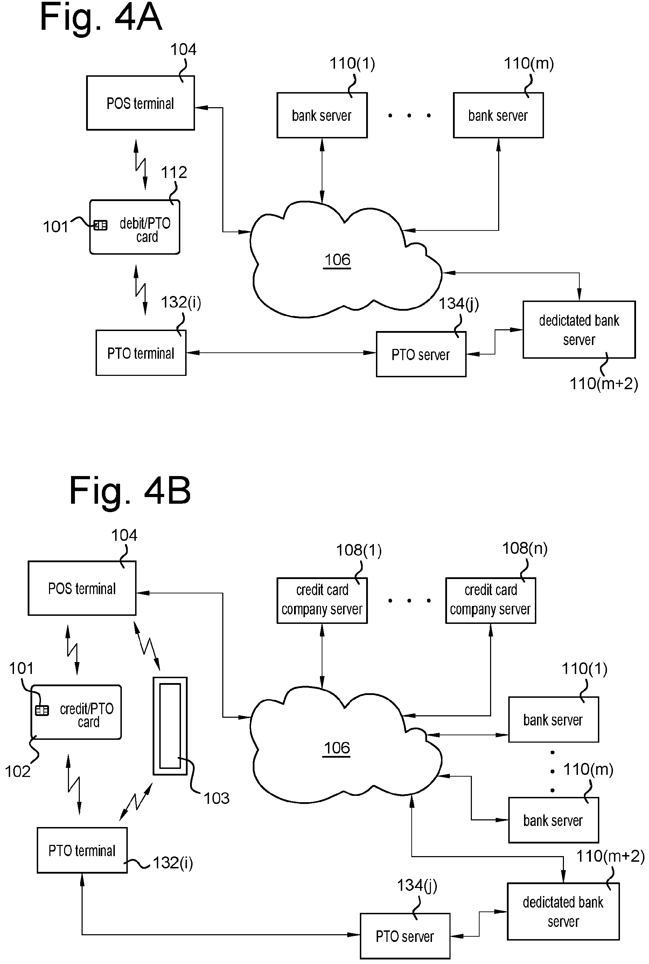

Figures 4A and 4B show schematic setups of systems in which a debit card 112 (Figure 4A) or credit card 102 / a mobile terminal 103 (Figure 4B) can be used for a financial transaction relating to received services like a public transport service provided by a PTO. The debit card 112, credit card 102 and mobile terminal 103 are the same as in the prior art and can still be used to pay for bought goods at a POS terminal 104 as explained hereinbefore. Mobile terminal 103 may have the components as shown in Figure 8. The systems as shown in Figures 4A and 4B show an extra dedicated bank server 110(m+2) which is shown to have a direct connection with PTO server 134(j). This direct connection may be supported by telecommunication network 106. In general terms, this dedicated bank server 110(m+2) is configured to operate as a bank server like all other bank servers 110(m) in the sense that it will have all required licenses from the authorities concerned to do so. Dedicated bank server 110(m+2) may be provided with the same elements as the ones shown in Figure 8. As will be explained in detail hereinafter, the system works more or less like a "closed loop" system from the point of view of the PTO while it supports an essential open loop feature in the sense that anybody can use his/her debit card 112, credit card 102 or mobile terminal 103 for all other purposes known from the prior art.

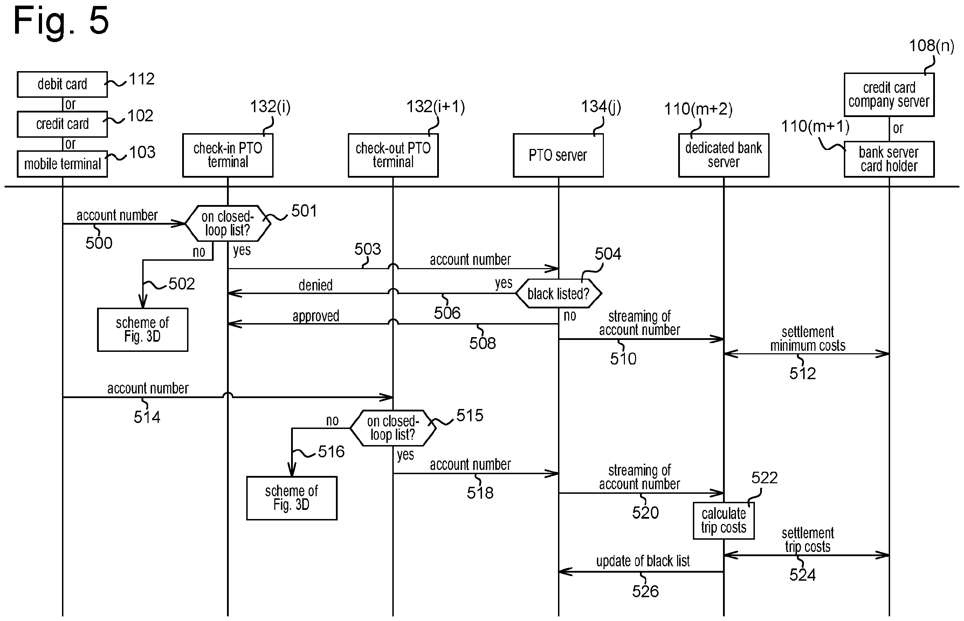

Figure 5 shows an embodiment of a schematic flow chart reflecting important actions performed by the different units shown in Figures 4A and 4B in accordance with the invention.

As shown in Figure 5, in action 500, a user of credit card 102/debit card 112/mobile terminal 103 who wishes to make a trip on public transport moves his/her credit card 102/debit card 112/mobile terminal 103 so close to check-in PTO terminal 132(i) that credit card 102/debit card 112/mobile terminal 103 and PTO terminal 132(i) can communicate with each other. This can be done by a swiping action or touching PTO terminal 132(i) for a certain moment. During the swiping or touching PTO terminal 132(i) reads some data from credit card 102/debit card 112/mobile terminal 103, action 500. In case of a credit card 102 or a debit card 112, respectively, that data is read from chip 101 and includes the "primary account number", PAN, which uniquely identifies the account of the card holder at credit card company server 108(n) or bank server 110(m+1), respectively. In case of a mobile terminal 103, the financial transaction is supported by, e.g., ApplePay^{™}, Samsung Pay^{™} or GooglePay^{™}, or any similar mobile terminal payment scheme. Then the mobile terminal 103 has a token stored in its memory 804, preferably in encrypted form, which token indicates that the mobile terminal 103 can be used for financial transactions at POS terminals 104 and PTO terminals 132(1, 2, ..., I). In the context of ApplePay^{™} this token is called a Device Account Number, DAN. Samsung Pay^{™} uses the term Digitized Primary Account Number, DPAN, and GooglePay^{™}, uses the term Device Primary Account Number, DPAN. The term "DAN" will be used hereinafter to explain the invention in detail, but it is intended to refer to "DPAN" and any other equivalent token too. In the invention any type of token can be used. This DAN uniquely identifies the mobile terminal 103. The mobile terminal 103 can be any type of mobile terminal including but not limited to mobile telephones, smart watches, tablets, etc. Moreover, as known from the prior art, each DAN is uniquely linked to a Funding Primary Account Number, FPAN, which indicates the number of a bank account at which financial transactions should be settled. This link is preferably not public but encrypted. The bank account can be either relating to a credit card or debit card. In the context of the present invention, this FPAN relates to a bank account at dedicated bank 110(m+2).

So, in case of the user presenting a mobile terminal 103, in action 500, PTO terminal 132(i) reads the, DAN, from memory 804 in mobile terminal 103.

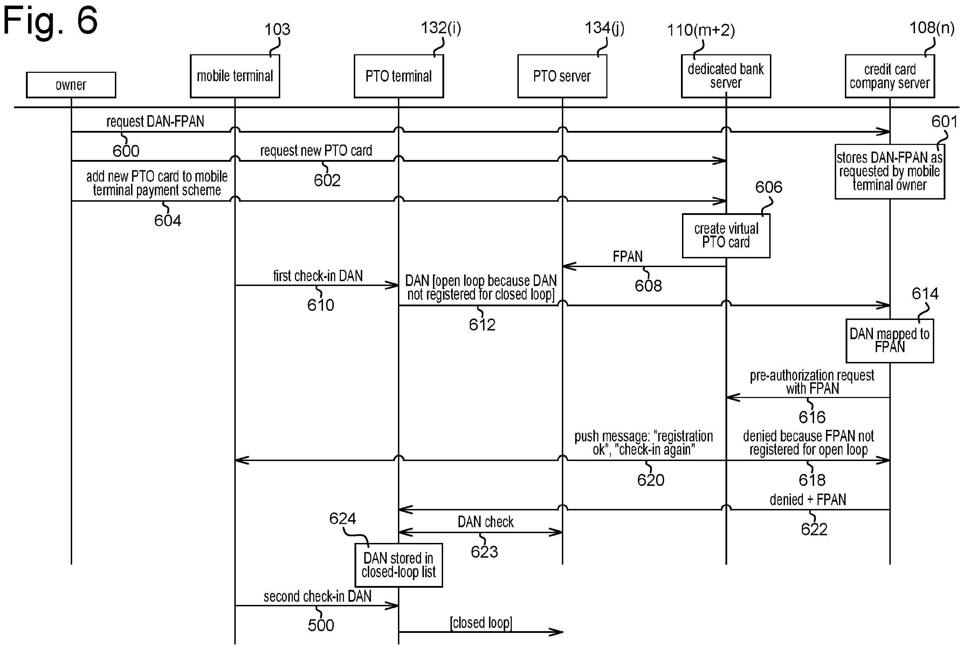

In action 501, PTO terminal 132(i) checks if the received PAN/DAN is registered to be used in the new closed-loop transaction. To that end, PTO terminal 132(i) has stored a closed-loop list in its memory 804 identifying smart card numbers to which this new closed-loop transaction scheme applies. In an embodiment, this list contains DAN's of mobile terminals 103 to which the new scheme applies as well as a list of Bank Identification Numbers, BIN, to which the new scheme applies. A BIN refers to the initial set of four to six numbers that appear on a payment card. This set of numbers identifies the institution that issues the card and is key in the process of matching transactions to the issuer of the charge card. The numbering system applies to credit cards, charge cards, prepaid cards, gift cards, debit cards, prepaid cards, and electronic benefit cards. If the BIN is used, a whole series of cards could be directly recognized by the PTO terminal 132(i) by just checking the BIN independent of the digits following the BIN and identifying the individual part of the number on the card. Of course, other ways of registering debit cards 112, credit cards 102 to which the new scheme applies can be used, including storing a list off all complete individual numbers of the debit cards 112, credit cards 102. This closed-loop list is updated, e.g., by PTO server 134(j) on a regular basis. Hereinafter, with reference to Figure 6, it will be explained how updating of the list can be performed, especially for DANs associated with mobile terminals 103.

If the received BIN/DAN is not present on the closed-loop list, the process may continue, action 502, as an open-loop process as explained with reference to Figure 3D. Instead, the PTO concerned may have decided to not or no longer support such an open-loop process and simply deny the requested transaction and inform the user accordingly via a message on its display 812 and/or an audible sound via its output device 810. In case mobile terminal 103 is presented by the user, mobile terminal 103 may display a denial message on its display 812 and/or generate an audible denial sound via its output device 810.

If the received BIN/DAN is present on the closed-loop list the PAN/DAN is forwarded by PTO terminal 132(i) to PTO server 134(j), action 503. PTO server 134(j), after having received the PAN/DAN, action 504, establishes that action 500 is a check-in action and checks if the PAN/DAN is blacklisted. If so, PTO server 134(j) sends a denial signal, action 506, back to PTO terminal 132(i). PTO terminal 132(i) may inform the user accordingly via a message on display 812 and/or an audible sound via its output device 810. In case mobile terminal 103 is presented by the user, mobile terminal 103 may display a denial message on its display 812 and/or generate an audible denial sound via its output device 810.

If the PAN/DAN is not blacklisted, PTO server 134(j) sends an approval signal, action 508, to PTO terminal 132(i). PTO terminal 132(i) may inform the user of a successful check-in via a message on display 812 and/or an audible sound via its output device 810 and the user can start his/her trip with the PTO.

PTO server 134(j) has stored a link between a received DAN and an associated FPAN of a bank account at dedicated bank 110(m+2) (Figure 6 explains in detail how this is implemented). So, in case of a received DAN, PTO server 134(j) substitutes this DAN for the associated FPAN. PTO server 134(j) streams the received PAN/FPAN, action 510, to dedicated bank server 110(m+2). Dedicated bank server 110(m+2) recognizes the received PAN/FPAN and performs a settlement action 512 for a minimum amount of costs with the account of the holder at credit card company server 108(n) or bank server 110(m+1). Dedicated bank server 110(m+2) may be associated with the bank at which the PTO concerned has its own bank account. Coincidently, the card / mobile terminal holder may also have his/her bank account at the dedicated bank server 110(m+2). Then, the settlement 512 is at least partly internal to the dedicated bank server 110(m+2). Financial transactions with credit card accounts and debit card accounts have been explained hereinbefore and do not need any further explanation here. It is observed that settlement action 512 may be implemented as an authorization request in which dedicated bank server 110(m+2) requests credit card company server 108(n) or bank server 110(m+1) to reserve an amount of money equal to a minimum amount of costs.

When the user of the credit card 102 / debit card 112 / mobile terminal 103 finishes his/her trip he/she moves his/her credit card 102/debit card 112/mobile terminal 103 so close to check-out PTO terminal 132(i+1) that credit card 102/debit card 112/mobile terminal 103 and PTO terminal 132(i+1) can communicate with each other. This can be done by a swiping action or touching PTO terminal 132(i+1) for a certain moment. During the swiping or touching PTO terminal 132(i+1) reads some data from credit card 102/debit card 112/mobile terminal 103, action 514. In case of a credit card 102 or a debit card 112, respectively, that data is read from chip 101 and includes the PAN. In case of a mobile terminal 103 PTO terminal 132(i) reads the DAN from a dedicated chip on the mobile terminal 103.

In action 515, PTO terminal 132(i+1) checks if the received BIN/DAN is on the closed-loop list and, thus, belongs to a series of PANs/DANs that can be used in the new closed-loop transaction. To that end, also PTO terminal 132(i+1) stores the same closed-loop list as is stored by check-in PTO terminal 132(i). The closed-loop list on PTO terminal 132(i+1) is also updated, e.g., by PTO server 134(j) on a regular basis. Actually, all PTO terminals 132(1, 2, ..., I) are, preferably, updated at the same time such that they all have identical closed-loop lists.

If the received BIN/DAN is not present on the closed-loop list, the process may continue, action 516, as an open-loop process, as explained with reference to Figure 3D. Instead, the PTO concerned may have decided to not or no longer support such an open-loop process and simply deny the requested transaction and inform the user accordingly via a message on its display 812 and/or an audible sound via its output device 810. In case mobile terminal 103 is presented by the user, mobile terminal 103 may display a denial message on its display 812 and/or generate an audible denial sound via output device 810.

If the received BIN/DAN is present on the closed-loop list the BIN/DAN is forwarded by PTO terminal 132(i+1) to PTO server 134(j), action 518.

PTO server 134(j) establishes that action 514 is a check-out action and may inform the user that he/she is successfully checked-out via a message on a display 812 and/or an audible sound via an output device 810. In case mobile terminal 103 is presented by the user, mobile terminal 103 may display a successful check-out message on its display 812 and/or generate an audible denial sound via its output device 810.

In case of a received DAN, PTO server 134(j) substitutes this DAN for the associated FPAN. PTO server 134(j) streams the received PAN/FPAN, action 520, to dedicated bank server 110(m+2). Dedicated bank server 110(m+2) recognizes the received PAN/FPAN and checks if this relates to a checking-in or checking-out action. If it relates to a checking-out action, dedicated bank server 110(m+2) calculates, in action 522, the total trip costs taking into account the already settled minimum costs as already settled in action 512. Dedicated bank server 110(m+2) performs a settlement action 524 for these total trip costs with the account of the holder at credit card company server 108(n) or bank server 110(m+1). As observed hereinbefore, dedicated bank server 110(m+2) may be associated with the bank at which the PTO concerned has its own bank account. Coincidently, the card / mobile terminal holder may also have his/her bank account at the dedicated bank server 110(m+2). Then, the settlement 528 is at least partly internal to the dedicated bank server 110(m+2). Financial transactions with credit card accounts and debit card accounts have been explained hereinbefore and do not need any further explanation here.

It is observed that, during action 512 and/or 524, dedicated bank server 110(m+2) establishes that the financial settlement cannot be performed, e.g., due to a too low amount on the bank account concerned or a debit card, credit card or DAN on a mobile terminal being blacklisted. If so, dedicated bank server 110(m+2) action 526, updates the blacklist as stored in PTO server 134(j).

As explained hereinbefore, in accordance with the invention, PTO terminals 132(1, 2, ..., I) should have stored a closed-loop list in their memory 804. The closed-loop list identifies all credit card PANs, debit card PANs and mobile terminal DANs of subscribers to the new closed-loop scheme.

There are several possibilities. First of all, debit cards 112 and credit cards 102 can be issued by the dedicated bank who is operating dedicated bank server 110(m+2). In an embodiment, holders of these cards can register with dedicated bank server 110(m+2) that they subscribe to the new closed scheme. Such a registration can be done via completing an appropriate paper form and sending it to the dedicated bank or directly registering it themselves while having internet access to their own bank account. Ways to register service options for bank accounts via the internet are known in the art and need no further explanation here. Once such a subscription to the new closed-loop system is registered, dedicated bank server 123(m+2) informs PTO server 134(j) accordingly by sending PANs of new subscribers. PTO server 134(j) collects these PANs of new subscribers and informs all PTO terminals 132(1, 2, ..., I) on a regular basis, e.g., in the form of batches of PANs of new subscribers on an hourly or daily basis. PTO terminals 132(1, 2, ..., I) use this data to update their closed-loop lists in their memories 804.

The same mechanism can be used for holders of credit cards 102 issued by the dedicated bank itself.

Secondly, holders of debit cards 112 and credit cards 102 of other banks and credit card companies than the dedicated bank can use the following method of subscribing to the new closed-loop scheme. For instance, their bank or credit card company makes an agreement with the PTO concerned specifying that they can use the new closed-loop scheme by registering with their own bank or credit card company. Then, these credit card or debit card holders can inform their credit card company or bank that they want to become subscriber by completing a paper form and sending this completed form to the credit card company or bank. Alternatively, they can log-in into their own account at the credit card company server 108(n) or bank server 110(m+1) via the internet in any way known in the art and then register for this subscription in their own account. Once registered, credit card company server 108(n) or bank server 110(m+1) sends this registration to dedicated bank server 110(m+2) who then registers the associated PAN in a list identifying subscribers to the new closed-loop scheme. Dedicated bank server 110(m+2) adds all PANs of new subscribers from all bank servers 110(1, 2, ..., M) and credit card company servers 108(n) which are members to the new scheme in this list. Dedicated bank server 110(m+2) forwards the updated list or only the updates in this list to PTO server 134(j), e.g., in the form of batches on an hourly or daily basis. PTO server 134(j) receives the PANs of new subscribers and informs all PTO terminals 132(1, 2, ..., I) on a regular basis, e.g., in the form of batches of PANs of new subscribers on an hourly or daily basis. PTO terminals 132(1, 2, ..., I) use this data to update their closed-loop lists in their memories 804.

Registering DANs of mobile terminals 103 is more complex and will be explained with reference to Figure 6.

The scheme of Figure 6 starts with the presumption that an owner of a mobile terminal 103 has a bank account at dedicated bank server 110(m+2). The owner desires to use this bank account for financial transactions with her/his mobile terminal 103. He/she has sent a request to this effect to credit card company 108(n) associated with the dedicated bank 110(m+2). This request can be addressed to dedicated bank 110(m+2). This is schematically indicated with reference sign 600. As a consequence, schematically indicated with reference sign 601, credit card company server 108(n) has stored both a Funding Primary Account Number, FPAN, associated with the mobile owner's bank account at dedicated bank server 110(m+2) and a DAN, which DAN is also stored in memory of the mobile terminal 103. As explained above, this DAN has a unique, preferably encrypted, relation with the FPAN. This is prior art and does not need any detailed explanation here.

As shown in Figure 6, action 602, the mobile terminal's owner starts the registration process by ordering a new PTO card at the dedicated bank server 110(m+2) where he/she already has a bank account associated with this FPAN. Such an order can be transmitted in any known way, including via paper request forms or via an internet request at dedicated bank server 110(m+2). As a follow-up the dedicated bank produces a new physical PTO card 130 in relation to the FPAN and registers this combination in memory 804 of dedicated bank server 110(m+2). This physical PTO card 130 can be used in the prior art closed-loop scheme as explained hereinbefore.

In action 604, the holder of the new PTO card 130 sends a request to dedicated bank server 110(m+2) to enable a mobile terminal payment scheme, like ApplePay^{™} or GooglePay^{™}, in relation to this new PTO card 130. To that effect, in an embodiment, the holder logs in into his account at dedicated bank server 110(m+2) associated with the FPAN of his new PTO card 130, and then sends this enablement request. As a consequence of the enablement request, in action 606, dedicated bank server 110(m+2) creates a virtual PTO card linked to this FPAN. In action 608, dedicated bank server 110(m+2) sends this FPAN to PTO server 134(j).

In action 610, the user of mobile terminal 103 tries to check in at PTO terminal 132(i) for the very first time after he/she has enabled the mobile terminal payment scheme in relation to the FPAN of his/her new physical PTO card 130. He/she does so by presenting his/her mobile terminal 103 to PTO terminal 132(i) such that PTO terminal 132(i) can read the DAN from the memory 804 of this mobile terminal 103. However, this DAN is not yet listed on the closed-loop list in memory 804 of PTO terminal 132(i), so, PTO terminal 132(i) cannot start the new closed loop service system as explained with reference to Figure 5 for this mobile terminal 103 yet. Consequently, PTO terminal 132(i) starts a prior art open-loop transaction process, action 612, in which the DAN is directly forwarded to credit card company server 108(n) associated with the prior art open-loop mobile terminal payment scheme.

In action 614, credit card company server 108(n) looks up the FPAN associated with this DAN of mobile terminal 103, which FPAN indicates the bank account number of the holder of mobile terminal 103 at which credit card company server 108(n) can settle the costs for the trip to be made by the user of the mobile terminal 103.

Credit card company server 108(n) recognizes that the retrieved FPAN belongs to dedicated bank 110(m+2) and sends a pre-authorization request for a certain money transfer including the FPAN to dedicated bank server 110(m+2). The purpose of this pre-authorization request is to ask allowance for a payment of a minimum amount from the dedicated bank account of the owner of mobile terminal 103 in dedicated bank server 110(m+2) as indicated by the FPAN to a bank account of the PTO in relation to the trip the user of the mobile terminal 103 wishes to make.

After receiving the FPAN from credit card company server 108(n) dedicated bank server 110(m+2), based on earlier actions 604-608, recognizes that this FPAN is registered for the new closed-loop transaction scheme and not for open-loop transactions. Since pre-authorization request 616 can only be made in an open loop transaction scheme, dedicated bank server 110(m+2) denies the pre-authorization request and sends a denial signal back, action 618, to credit card company server 108(n).

In action 620, dedicated bank server 110(m+2) sends a push message to the mobile terminal 103 and/or to PTO terminal 132(i) indicating that the mobile terminal 103 has now been registered for mobile terminal payments under the new closed-loop transaction scheme. This message is shown to the user on display 812 of the mobile terminal 103 and/or PTO terminal 132(i). Moreover, the message indicates to the user that he/she has to perform a new check-in action to cause a valid check-in process.

Meanwhile, upon receiving the denial signal in action 618, credit card company server 108(n) generates a denial signal for PTO terminal 132(i) and transmits this denial signal together with the FPAN, action 622, to PTO terminal 132(i) to which it still has the above mentioned open-loop communication connection.

Due to the receipt of this denial signal with the FPAN, PTO terminal 132(i) can now make a link between the DAN and associated FPAN. PTO terminal 132(i) will start a communication session with PTO server 134(j), action 623, in which it checks if PTO server 134(j) does already have the link between the received FPAN and the DAN, as received in action 610. If not, PTO terminal 132(i) sends the DAN to PTO server 134(j) and PTO server 134(j) will also link the FPAN to the DAN, and register that link in its own memory. PTO terminal 132(i) adds, action 624, this DAN to the closed-loop list in its own memory. Now, the closed-loop list contains the DAN number. After that, PTO server 134(j) will also inform all other PTO terminals 132(i+1) that the DAN concerned is to be included in their closed-loop list. If the user of mobile terminal 103 performs a second check-in attempt, PTO terminal 132(i) will recognize the received DAN and perform a closed-loop transaction, as indicated with action 500, after which the actions of Figure 5 will follow. Since all PTO terminals 134(j) have now updated their closed-loop list with the DAN concerned, the owner (or other user) of mobile terminal 103 can now also check-out everywhere he/she wants.

**As** apparent from the above description, all devices used in the invention are computer based devices having a processor unit running some software to perform the functions explained with reference to the flowcharts. The software, which includes instructions and data, needed to be loaded and run by such processor unit can be stored on any suitable physical data carrier and/or transmitted from one location to another via any suitable data carrier as defined in any suitable communication standard.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments, as claimed in the appended claims. It is to be understood that the phraseology or terminology employed herein is for the purpose of description and not of limitation.

Some embodiments of the invention can be summarized as follows.

An embodiment relates to a method of providing a service to a user comprising:
receiving (500), by a first service provider terminal (132(i)), an account number (PAN; DAN) stored in a chip of a mobile device (102; 112; 103), which mobile device is configured to be used in open-loop financial transactions;
checking (501), by the first service provider terminal (132(i)) if the received account number (PAN; DAN) is present on a closed-loop list, the closed-loop list identifying account numbers for which a closed-loop service is supported;
   if so, forwarding (503), by the first service provider terminal (132(i)), the received account number to a service provider server (134(j)) configured to either approve or deny, respectively, the closed-loop service and receiving, from the service provider server (134(j)), either an approval signal (508) or a denial signal (506);
   if not, either denying the service or initiating (502), by the first service provider terminal (132(i)), an open-loop financial transaction process in which it is checked if the service is approved by a financial institute server (108(n); 110(m)) associated with the received account number.

In this method said mobile device may be one of a debit card (112), a credit card (102) or a mobile terminal (103), and in case of the mobile device being one of said debit card (112) and credit card (102) the account number may be a Primary Account Number, PAN, and in case said mobile device is a mobile terminal (103) the account number may be a unique token (DAN) linked to a Funding Primary Account Number, FPAN, and the method may further comprise:
substituting, by the service provider server (134(j)), received DANs for the linked FPAN.

The method may comprise:
in case said service provider server (134(j)) approves the closed-loop service, streaming (510), by the service provider server (134(j)), of the account number (PAN; FPAN) to a dedicated bank server (110(m+2)).

The method may comprise:
in case the receiving (500), by the first service provider terminal (132(i)), of the account number (PAN; DAN) stored in the chip of the mobile device (102; 112; 103), relates to a checking-in action for the service by the user, performing, by the dedicated bank server (110(m+2)), a first settlement action (512).

In the method the performing of the first settlement action (512) may be done by the dedicated bank server (110(m+2)) with either another bank server (110(m+1)) or a credit card company server (108(n)).

The method may comprise:
in case the receiving (500), by the first service provider terminal (132(i)), of the account number (FPAN; DAN) stored in the chip of the mobile device (102; 112; 103), relates to a checking-out action for the service by the user, performing, by the dedicated bank server (110(m+2)), a second settlement action (524).

In the method the performing of the second settlement action (524) may be done by the dedicated bank server (110(m+2)) with either another bank server (110(m+1)) or a credit card company server (108(n)).

In another aspect, the invention relates to a system comprising a first service provider terminal (132(i)), a service provider server (134(j)), wherein the first service provider terminal (132(i)) and the service provider server (134(j)) are configured to perform one of the above mentioned methods.

The system may also comprise a dedicated bank server (110(m+2)).

In a further aspect, the invention relates to an enrolment method of a mobile terminal (103) to a closed-loop service, comprising:
receiving (610), by a first service provider terminal (132(i)) which is configured to support a service to a user of the mobile terminal (103), a unique token (DAN) stored in a chip of the mobile terminal (103) and linked to a Funding Primary Account Number, FPAN, which unique token indicates that the mobile terminal (103) is configured to be used in financial transactions;
determining, by the first service provider terminal (132(i)) that the unique token (DAN) is not present on a closed-loop list, the closed-loop list identifying tokens for which a closed-loop service is supported;
initiating (612-618), by the first service provider terminal (132(i)), an open-loop financial transaction process in which it is checked if the service is approved by a financial institute server (108(n); 110(m)) associated with the received unique token;
receiving (622), by the first service provider terminal (132(i)) from the financial institute server (108(n); 110(m)), a denial signal as well as the FPAN;
linking (624), by the first service provider terminal (132(i)), the received account number (FPAN) to the received token (DAN) and adding the unique token (DAN) to the closed-loop list.

The enrolment method may comprise:
in said open-loop financial transaction process (612-618), by said service provider terminal (132(i)), sending (612) said unique token to said financial institute server (108(n)),
mapping (614), by said financial institute server (108(n)), said received unique token (DAN) to said linked FPAN,
sending (616), by said financial institute server (108(n)), a pre-authorization request for a financial settlement to a dedicated bank server (110(m+2)), said pre-authorization request including said linked FPAN, and
receiving (618), by said financial institute server (108(n)), a denial message to said pre-authorization request from said dedicated bank server (110(m+2)).

The enrolment method may comprise:
sending (620), by said dedicated bank server (110(m+2)), after said dedicated bank server (110(m+2)) has received said pre-authorization request from said financial institute server (108(n)), a push message to said mobile terminal (103) and/or PTO terminal (132(i)) indicating that said unique token has been registered for said closed-loop service.

The enrolment method may comprise:
after anew receiving said unique token (DAN) from said mobile terminal (103) by said service provider terminal (132(i)), performing the method according to any of the claims 1-7 in which said unique token (DAN) is said account number.

The enrolment method may comprise:
after said action of receiving (622), by the first service provider terminal (132(i)) from the financial institute server (108(n); 110(m)), said denial signal as well as said FPAN, sending at least said unique token (DAN) to said PTO server (134(j),
sending, by said PTO terminal (134(j), said unique token (DAN) to other PTO terminals (132(i+1)), and;
storing, by said other PTO terminals (132(i+1)), said received unique token (DAN).

Finally, in a further aspect, the invention may relate to a system comprising a first service provider terminal (132(i)), wherein the first service provider terminal (132(i)) is configured to perform one of the last mentioned methods.

The system may also comprise a financial institute server (108(n)) and/or a dedicated bank server (108(n)).

## Claims

1. A method of providing a service to a user comprising:
receiving (500), by a first service provider terminal (132(i)), an account number (PAN; DAN) stored in a chip of a mobile device (102; 112; 103) configured to be used in open-loop financial transactions, from the mobile device (102; 112; 103);
checking (501), by the first service provider terminal (132(i)) if the received account number (PAN; DAN) is present on a closed-loop list stored in the first service provider terminal (132(i)), the closed-loop list identifying account numbers for which a closed-loop service is supported;
if so, forwarding (503), by the first service provider terminal (132(i)), the received account number to a service provider server (134(j)) configured to either approve or deny, respectively, the closed-loop service and receiving, from the service provider server (134(j)), either an approval signal (508) or a denial signal (506);
if not, either denying the service or initiating (502), by the first service provider terminal (132(i)), an open-loop financial transaction process in which it is checked if the service is approved by a financial institute server (108(n); 110(m)) associated with the received account number.

2. The method according to claim 1, wherein said mobile device is one of a debit card (112), a credit card (102) and a mobile terminal (103), and in case of the mobile device being one of said debit card (112) and credit card (102) the account number is a Primary Account Number, PAN, and in case said mobile device is a mobile terminal (103) the account number is a unique token (DAN) linked to a Funding Primary Account Number, FPAN, the method comprising:
substituting, by the service provider server (134(j)), received DANs for the linked FPAN.

3. The method according to claim 2, comprising:
in case said service provider server (134(j)) approves the closed-loop service, streaming (510), by the service provider server (134(j)), of the account number (PAN; FPAN) to a dedicated bank server (110(m+2)).

4. The method according to claim 3, comprising:
in case the receiving (500), by the first service provider terminal (132(i)), of the account number (PAN; DAN) stored in the chip of the mobile device (102; 112; 103), relates to a checking-in action for the service by the user, performing, by the dedicated bank server (110(m+2)), a first settlement action (512).

5. The method according to claim 4, wherein the performing of the first settlement action (512) is done by the dedicated bank server (110(m+2)) with either another bank server (110(m+1)) or a credit card company server (108(n)).

6. The method according to any of the claims 3-5, comprising:
in case the receiving (500), by the first service provider terminal (132(i)), of the account number (FPAN; DAN) stored in the chip of the mobile device (102; 112; 103), relates to a checking-out action for the service by the user, performing, by the dedicated bank server (110(m+2)), a second settlement action (524).

7. The method according to claim 6, wherein the performing of the second settlement action (524) is done by the dedicated bank server (110(m+2)) with either another bank server (110(m+1)) or a credit card company server (108(n)).

8. A system comprising a first service provider terminal (132(i)), a service provider server (134(j)), wherein the first service provider terminal (132(i)) and the service provider server (134(j)) are configured to perform the method of claim 1 or 2.

9. The system of claim 8, wherein the system also comprises a dedicated bank server (110(m+2)), and the system is configured to perform the method of any of the claims 3 to 7.

10. An enrolment method of a mobile terminal (103) to a closed-loop service, comprising:
receiving (610), by a first service provider terminal (132(i)) which is configured to support a service to a user of the mobile terminal (103), from the mobile terminal (103), a unique token (DAN) stored in a chip of the mobile terminal (103) and linked to a Funding Primary Account Number, FPAN, which unique token indicates that the mobile terminal (103) is configured to be used in financial transactions;
determining, by the first service provider terminal (132(i)) that the unique token (DAN) is not present on a closed-loop list stored in the first service provider terminal (132(i)), the closed-loop list identifying tokens for which a closed-loop service is supported;
initiating (612-618), by the first service provider terminal (132(i)), an open-loop financial transaction process in which it is checked if the service is approved by a financial institute server (108(n); 110(m)) associated with the received unique token;
receiving (622), by the first service provider terminal (132(i)) from the financial institute server (108(n); 110(m)), a denial signal as well as said FPAN;
linking (624), by the first service provider terminal (132(i)), the received account number (FPAN) to the received token (DAN) and adding the unique token (DAN) to the closed-loop list.

11. The enrolment method of claim 10, comprising:
in said open-loop financial transaction process (612-618), by said service provider terminal (132(i)), sending (612) said unique token (DAN) to said financial institute server (108(n)), mapping (614), by said financial institute server (108(n)), said received unique token (DAN) to said linked FPAN,
sending (616), by said financial institute server (108(n)), a pre-authorization request for a financial settlement to a dedicated bank server (110(m+2)), said pre-authorization request including said linked FPAN, and
receiving (618), by said financial institute server (108(n)), a denial message to said pre-authorization request from said dedicated bank server (110(m+2)).

12. The enrolment method of claim 11, comprising:
sending (620), by said dedicated bank server (110(m+2)), after said dedicated bank server (110(m+2)) has received said pre-authorization request from said financial institute server (108(n)), a push message to said mobile terminal (103) indicating that said unique token (DAN) has been registered for said closed-loop service.

13. The enrolment method of any of the claims 10-12, comprising:
after anew receiving said unique token (DAN) from said mobile terminal (103) by said service provider terminal (132(i)), performing the method according to any of the claims 1-7 in which said unique token (DAN) is said account number.

14. The enrolment method according to any of the claims 10-13, comprising:
after said action of receiving (622), by the first service provider terminal (132(i)) from the financial institute server (108(n); 110(m)), said denial signal as well as said FPAN, sending at least said unique token (DAN) to said PTO server (134(j),
sending, by said PTO terminal (134(j), said unique token (DAN) to other PTO terminals (132(i+1)), and;
storing, by said other PTO terminals (132(i+1)), said received unique token (DAN).

15. A system comprising a first service provider terminal (132(i)), wherein the first service provider terminal (132(i)) is configured to perform the method of claim 10.

16. The system of claim 14, wherein the system also comprises a financial institute server (108(n)), and the system is configured to perform the method of claim 11.

17. The system of claim 15, wherein the system also comprises a dedicated bank server (108(n)), and the system is configured to perform the method of claim 12.
